# EUROPÄISCHE PATENTSCHRIFT

(11) **EP 1 556 587 B1**
(45) Veröffentlichungstag und Bekanntmachung des Hinweises auf die Patenterteilung: **07.06.2006**
(21) Anmeldenummer: 03748107.4
(22) Anmeldetag: 02.10.2003
(51) Int. Cl.: F01N 3/08, F01N 3/022, F01N 3/035, F01N 3/20

(54) **ABGASNACHBEHANDLUNGSSYSTEM, INSBESONDERE FÜR EINEN DIESELMOTOR**
EXHAUST GAS AFTERTREATMENT SYSTEM, ESPECIALLY FOR A DIESEL ENGINE
SYSTEME DE POST-TRAITEMENT DE GAZ D'ECHAPPEMENT, NOTAMMENT POUR MOTEUR DIESEL

(30) Priorität: 25.10.2002 DE 10250050
(43) Veröffentlichungstag der Anmeldung: 27.07.2005
(73) Patentinhaber: PUReM Abgassysteme GmbH & Co. KG, 59423 Unna (DE)
(72) Erfinder: HÜTHWOHL, Georg, 59494 Soest (DE); MAURER, Bernd, 58802 Balve (DE)
(74) Vertreter: Kreiser, André Manfred
(86) Internationale Anmeldenummer: PCT/EP2003/010917
(87) Internationale Veröffentlichungsnummer: WO 2004/038192

(56) Entgegenhaltungen:
- EP-A- 0 537 968
- EP-A- 1 132 582
- EP-A- 1 217 196
- US-A1- 2002 095 918
- PATENT ABSTRACTS OF JAPAN vol. 1997, no. 07, 31. Juli 1997 (1997-07-31) & JP 09 088569 A (MITSUBISHI MOTORS CORP), 31. März 1997 (1997-03-31)

## Beschreibung

Die Erfindung betrifft ein Abgasnachbehandlungssystem, insbesondere für einen Dieselmotor, mit den Merkmalen des Oberbegriffs des Anspruchs 1.

In der deutschen Offenlegungsschrift DE 100 42 542 A1 ist ein Abgasnachbehandlungssystem mit einem Abgaspartikelfilter und einem SCR-Katalysator beschrieben. In dem Gehäuse des Abgasnachbehandlungssystems sind das Abgaspartikelfilter und der SCR-Katalysator angeordnet und bilden mit diesem eine bauliche Einheit. In ein spezielles, parallel zum Abgaspartikelfilter im Gehäuse angeordnetes und von gefiltertem Abgas durchströmtes Rohrelement wird Harnstoff als Reduktionsmittel zur selektiven katalytischen Reduktion von Stickoxiden eingespritzt, welcher dann dem SCR-Katalysator zugeführt wird. In dem Gehäuse sind mehrere durch Trennwände voneinander getrennte Kammern vorgesehen, welche als Reflexionskammern bzw. Absorptionskammern dienen und somit eine Schalldämpfung bewirken.

Aufgabe der Erfindung ist es, ein Abgasnachbehandlungssystem anzugeben, mit welchem eine umfassende Abgasreinigung erzielt werden kann, das baulich einfach und kompakt gestaltet ist und einer möglichst guten Schalldämpfung dienen kann.

Diese Aufgabe wird erfindungsgemäß durch ein Abgasnachbehandlungssystem mit den Merkmalen des Anspruchs 1 gelöst.

Erfindungsgemäß ist das Abgaspartikelfilter als ein poröser zylindrischer Filterkörper mit im wesentlichen radialer Abgaseinströmrichtung in den Filterkörper, einem Filterinnenbereich für gefiltertes Abgas und axialer Abgasausströmrichtung aus dem Filterinnenbereich gebildet, und über die Reduktionsmittelzugabevorrichtung ist eine Zugabe von Reduktionsmittel in den Filterinnenbereich vorgesehen.

Der Filterkörper ist als zylindrischer Hohlkörper mit einer porösen Zylinderwand ausgebildet und vorzugsweise so gestaltet, dass gefiltertes Abgas einseitig axial aus dem Filterinnenbereich ausströmen kann. Unter dem Filterinnenbereich wird dabei der mit gefiltertem Abgas erfüllbare Volumenbereich stromauf des ausströmseitigen Filterkörperendes verstanden. Das Wandmaterial des Filterkörpers kann als Tiefenfilter oder als Oberflächenfilter wirken und aus einem beliebigen abgasbeständigen, filterwirksamen, porösen Material, wie beispielweise aus Metallschaum oder Keramikschaum ausgebildet sein. Es kann außerdem zusätzlich auf der Außenseite, der Innenseite oder im porösen Materialinneren mit einer katalytischen Beschichtung versehen sein.

Als Stickoxid-Reduktionskatalysator kommt jeder Katalysator in Frage, welcher die Reduktion von Stickoxiden mit einem geeigneten Reduktionsmittel katalysieren kann. Als Reduktionsmittel kann jedes hinsichtlich der Stickoxidreduktion wirksame Reagens eingesetzt werden. Vorzugsweise ist der Stickoxid-Reduktionskatalysator als üblicher SCR-Katalysator auf Vanadiumpentoxid-Basis ausgebildet, und das Reduktionsmittel ist deshalb Ammoniak oder eine Flüssigkeit, aus welcher sich Ammoniak freisetzen lässt. Vorzugsweise wird wässrige Harnstofflösung als Reduktionsmittel verwendet. Entsprechend ist die Reduktionsmittelzugabevorrichtung vorzugsweise als Einspritzdüse ausgebildet.

Das Partikelfilter und der nachgeschaltete Stickoxid-Reduktionskatalysator können in getrennten Gehäusen oder in einem gemeinsamen Gehäuse angeordnet sein.

Durch die Zugabe in den Innenbereich des Filterkörpers wird eine platzsparende konstruktive Lösung mit kurzen Gaswegen erreicht. Dadurch wird eine Abkühlung des Abgases vor der Zugabe des Reduktionsmittels vermieden, so dass günstige thermischen Bedingungen zur Aufbereitung des Reduktionsmittels wie beispielsweise zur Freisetzung des Ammoniaks oder zur Verdampfung vorliegen. Zudem wird durch die Zugabe in den Filterinnenbereich eine gute Gleichverteilung und Homogenisierung des Reduktionsmittels im Abgas erreicht.

In Ausgestaltung der Erfindung ist der Filterkörper durch paarweise zusammengefasste poröse Filterplattenringe gebildet. Vorzugsweise ist der Filterkörper aus flachen, ringförmigen Sintermetallfilterplatten gebildet, welche wechselweise und paarweise entlang ihres Außenumfanges und entlang ihres inneren Ringumfanges beispielsweise durch eine Schweißnaht fest miteinander verbunden sind. Vorzugsweise weist der Filterkörper an einem Ende eine dichte Endplatte auf, während am anderen Ende eine ringförmige, gasdichte Endplatte angebracht ist, aus deren Öffnung das gefilterte Abgas axial ausströmen kann. Die Filterplattenringe können eine beliebige Form aufweisen, vorzugsweise werden sie jedoch annähernd rund mit einem mittigen Zentralloch ausgeführt. Auf diese Weise wird ein zylindrischer Filterkörper mit einer Form, ähnlich einer Ziehharmonika mit im Längsschnitt gesehen annähernd zickzackförmigen Konturen, gebildet. Dieser zeichnet sich durch eine große Filterfläche und einen geringen Druckverlust sowie durch eine hohe schalldämpfende Wirkung aus. Dadurch können im Abgasnachbehandlungssystem auf weitere konstruktive Schalldämpfungsmaßnahmen weitgehend verzichtet werden.

In weiterer Ausgestaltung der Erfindung sind der Stickoxid-Reduktionskatalysator und das Partikelfilter in einem gemeinsamen Gehäuse angeordnet. Dadurch werden mehrfache Abgasanschlüsse vermieden und eine kompakte Bauweise des Abgasnachbehandlungssystems erreicht. Insbesondere im Falle eines aus Sintermetallfilterringen aufgebauten Abgaspartikelfilters wird infolge dessen schalldämpfender Wirkung mit dieser Bauweise ein Abgasschalldämpfer mit Abgasreinigungsfunktion verwirklicht.

In weiterer Ausgestaltung der Erfindung sind Strömungsleitmittel zur Weiterleitung gefilterten Abgases zum Stickoxid-Reduktionskatalysator vorgesehen, welche ein aus dem Filterinnenbereich des Filterkörpers herausgeführtes Sammelrohr umfassen. Falls der Filterkörper aus Sintermetallfilterringen aufgebaut ist, dient das Sammelrohr zusätzlich zur Abgassammlung und -Weiterleitung der mechanischen Stabilisierung. Die einzelnen Filterplattenringe können sich auf dem Sammelrohr abstützen. Im Filterinnenbereich weist das Sammelrohr vorzugsweise eine gelochte Wandung für den Abgaseintritt auf. Sind der Stickoxid-Reduktionskatalysator und das Partikelfilter in einem gemeinsamen Gehäuse angeordnet, so können ferner eine oder mehrere geeignet im Gehäuse angeordnete Trennwände vorgesehen sein, durch welche das Gehäuse in Kammern unterteilt wird. Die Trennwand bzw. die Trennwände dienen in diesem Fall ebenfalls als Strömungsleitmittel der Weiterleitung gefilterten Abgases zum Stickoxid-Reduktionskatalysator oder dienen in anderer Weise der Abgasströmungsführung im Inneren des Gehäuses und verhindern zugleich eine Rückvermischung.

In weiterer Ausgestaltung der Erfindung ist im Sammelrohr, ein Katalysatorelement angeordnet. Ein solches Katalysatorelement kann in Abgasströmungsrichtung sowohl im Filterinnenbereich vorzugsweise kurz hinter der Zugabestelle des Reduktionsmittels, als auch weiter stromab angeordnet sein. Im Falle von Harnstoff als Reduktionsmittel ist es vorzugsweise als Hydrolysekatalysator ausgebildet, welches die Freisetzung von Ammoniak fördert. Durch die erfindungsgemäße Anordnung des Katalysatorelementes wird eine besonders kompakte und platzsparende Bauform erreicht.

In weiterer Ausgestaltung der Erfindung ist der Stickoxid-Reduktionskatalysator achsparallel und benachbart zum Sammelrohr angeordnet. Der Stickoxid-Reduktionskatalysator kann in einer solchen Anordnung ein oder mehrere Katalysatorteile umfassen. Bei mehrteilig ausgeführtem Stickoxid-Reduktionskatalysator sind die einzelnen Katalysatorteile vorzugsweise achsparallel um das Sammelrohr herum angeordnet. Durch diese Ausführungsform kann in platzsparender Weise das Volumen des Stickoxid-Reduktionskatalysators vergrößert werden.

In weiterer Ausgestaltung der Erfindung ist dem Abgaspartikelfilter in Abgasströmungsrichtung ein Oxidationskatalysator vorgeschaltet. Dies kann durch ein separates Katalysatorelement in einem separaten Gehäuse oder in dem Gehäuse, in welchem das Abgaspartikelfilter angeordnet ist, realisiert werden. Der Oxidationskatalysator dient beispielsweise der Oxidation von Kohlenwasserstoffen oder der Oxidation von Stickstoffmonoxid zu Stickstoffdioxid. Letzteres verbessertes das Regenerationsverhalten des Partikelfilters.

In weiterer Ausgestaltung der Erfindung sind das Abgaspartikelfilter und der Oxidationskatalysator in einem gemeinsamen Gehäuse angeordnet. Durch diese Anordnung wird eine besonders kompakte Baueinheit erhalten.

In weiterer Ausgestaltung der Erfindung ist eine aus dem Filterinnenbereich herausgeführte Abgasrückführleitung zur Abzweigung eines Teilstroms gefilterten Abgases stromauf der Reduktionsmittelzugabe und zur Rückführung zum Dieselmotor vorgesehen. Durch diese Maßnahme wird erreicht, dass dem Dieselmotor gefiltertes und reduktionsmittelfreies Abgas in der Abgasrückführleitung zugeführt wird. Damit werden Kondensationen in den mit dem rückgeführten Abgas in Kontakt kommenden Bauteilen vermieden.

Im Folgenden wird die Erfindung anhand von Zeichnungen und zugehörigen Beispielen näher erläutert. Dabei zeigen:
- Fig. 1: ein schematisches Schnittbild einer Ausführungsform des erfindungsgemäßen Abgasreinigungssystems und
- Fig. 2: ein schematisches Schnittbild einer weiteren Ausführungsform des erfindungsgemäßen Abgasreinigungssystems.

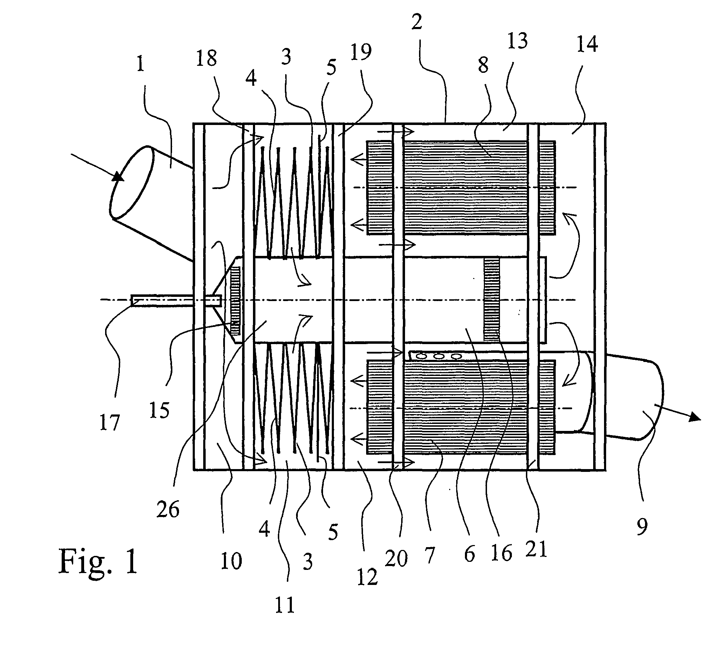

In Fig. 1 ist schematisch eine Ausführungsform des erfindungsgemäßen Abgasreinigungssystems im Längsschnitt dargestellt. Dieses umfasst im vorliegenden Fall ein Partikelfilter 3 und einen aus zwei Wabenkörpermonolithen 7, 8 bestehenden SCR-Katalysator, welche in einem gemeinsamen Gehäuse 2 mit einem Eingangsrohr 1 und einem Ausströmrohr 9 angeordnet sind. Zur Abgasführung sind ein Sammelrohr 6 und Trennwände 18, 19, 20, 21 im Gehäuse 2 vorgesehen. Die Funktionsweise des Abgasreinigungssystems wird nachfolgend anhand der Beschreibung des durch Pfeile schematisch gekennzeichneten Abgasströmungsweges erläutert.

Abgas eines nicht dargestellten Dieselmotors strömt durch das Eingangsrohr 1 in eine Einströmkammer 10 des Gehäuses 2. Die Trennwand 18 trennt die Einströmkammer 10 von einer Partikelfilterkammer 11, in welcher das Partikelfilter 3 angeordnet ist, ab. Die Trennwand 18 ist längs ihres Umfangs mit dem Gehäuse 2 verbunden, weist jedoch lochförmige Durchgänge, vorzugsweise ringsum entlang ihres Randbereichs auf. Diese Durchgänge ermöglichen den Übertritt des in die Einströmkammer 10 eingeströmten Abgases in die Partikelfilterkammer 11. Die Trennwand 19 begrenzt die andere Stirnseite der Partikelfilterkammer 11 und verhindert einen weiteren Übertritt ungefilterten Abgases in den weiter stromab liegenden Gehäuseteil.

Das Partikelfilter 3 ist aus einzelnen Filterringen aufgebaut, von denen stellvertretend hier nur ein Filterring 4 mit einem Bezugszeichen versehen ist. Die einzelnen Filterringe sind als Sintermetallfilterplatten mit einem Zentralloch ausgeführt und wechselseitig und paarweise entlang ihres Außenumfanges und entlang ihres inneren Ringumfanges, beispielsweise durch eine Schweißnaht, fest miteinander verbunden. Somit ist ein Filterkörper mit ziehharmonikaähnlicher Form und außenliegenden und innenliegenden Filtertaschen gebildet. Die endseitigen Filterringe des Filterkörpers sind umlaufend gasdicht mit den jeweiligen Trennwänden 18, 19 verbunden. Das in die Partikelfilterkammer 11 eingetretene Abgas strömt daher weiter durch die Filterringe des Filterkörpers in den Filterinnenbereich 26, wobei im Abgas enthaltene Partikel ausgefiltert werden. Die Hauptströmungsrichtung des Abgases verläuft somit radial vom Außenbereich des Filterkörpers in dessen Innenbereich 26.

Im Filterinnenbereich 26 wird das gefilterte Abgas von einem Sammelrohr 6 aufgenommen, wobei dieses im Inneren des Filterkörpers auf seiner Mantelfläche gelocht ausgeführt ist. Das Sammelrohr 6 weist vorzugsweise auf dem überwiegenden Teil seiner Länge denselben Querschnitt wie die Löcher der Sinter-metallfilterplatten auf, die sich daher im Inneren des Filterkörpers ringsum auf dem Sammelrohr 6 abstützen, wodurch sich eine hohe mechanische Stabilität des Filterkörpers ergibt.

Das Sammelrohr 6 ist in umlaufend gasdichten Verbindungen einerseits durch die Trennwand 18 und andererseits durch die Trennwände 19, 20, 21 aus der Partikelfilterkammer 11 in die Einströmkammer 10 bzw. bis in eine erste Umlenkkammer 14 herausgeführt. Im Bereich der Einströmkammer 10 ist gasdicht an das Sammelrohr 6 eine Reduktionsmittelzugabevorrichtung angeschlossen. Diese ist in Fig. 1 lediglich schematisch als eine in das sich an diesem Ende verengende Sammelrohr 6 geführte Zufuhrleitung 17 für Harnstoff-Wasser-Lösung gekennzeichnet. Durch die Zufuhrleitung 17 kann auf hier nicht näher angegebene Weise gezielt und bedarfsgerecht Harnstoff-Wasser-Lösung als Reduktionsmittel in den Filterinnenbereich 26 eingedüst werden. Vorzugsweise erfolgt die Eindüsung der Harnstoff-Wasser-Lösung druckluftunterstützt. Im Endbereich der Zufuhrleitung 17 erweitert sich das Sammelrohr 6 in Strömungsrichtung, wodurch eine gute Gleichverteilung des zugeführten Reduktionsmittels im Filterinnenbereich 26 erreicht wird. Zur weiteren Verbesserung der Reduktionsmittelverteilung, beispielsweise durch Verwirbelung, kann das Sammelrohr 6 in dem sich konisch verjüngenden Endbereich mit Löchern (nicht dargestellt) versehen sein, welche den Eintritt einer kleinen Menge ungefilterten Abgases aus der Einströmkammer 10 in das Sammelrohr 6 gestatten. Daraus resultiert eine weiter verbesserte Vermischung des zugegebenen Reduktionsmittels mit gefiltertem Abgas im stromaufwärtigen Bereich des Sammelrohrs 6.

Zur Aufbereitung des zugegebenen Reduktionsmittels bzw. zur Verbesserung der Freisetzung von Ammoniak aus dem zugegebenen Harnstoff kann im Sammelrohr 6 ein geeigneter Katalysator angeordnet sein. Dieser ist hier durch die als Hydrolysekatalysator wirkenden Katalysatorscheiben 15 und 16 verkörpert, welche die Zersetzung von Harnstoff und die Freisetzung von Ammoniak fördern. Der Hydrolysekatalysators kann prinzipiell an einer beliebigen Stelle im Sammelrohr 6 stromab der Harnstoffzugabe angeordnet sein, vorzugsweise ist jedoch ein erster Katalysatorteil 15 dicht hinter der Harnstoffzugabe und ein zweiter Katalysatorteil 16 im Endbereich des Sammelrohrs 6 angeordnet. Der Hydrolysekatalysator kann hierbei ganz oder in Teilen elektrisch beheizbar ausgeführt sein, um die Harnstoffzersetzung weiter zu verbessern.

Das mit dem Reduktionsmittel vermischte Abgas wird durch das Sammelrohr 6 bis in eine erste Umlenkkammer 14 geleitet, wo es aus der endseitigen Öffnung des Sammelrohres 6 austritt. Von dort wird es dem Stickoxid-Reduktionskatalysator zugeführt. Dieser ist hier durch zwei zylindrische SCR-Katalysatormonolithen 7, 8 realisiert, die achsparallel und benachbart zum Sammelrohr 6 angeordnet sind. Selbstverständlich können jedoch noch weitere Katalysatorteile eingesetzt um das Sammelrohr 6 angeordnet sein. An ihrem eingangsseitigen Ende sind die SCR-Katalysatoren 7, 8 ringsum abgedichtet durch entsprechende Öffnungen der Trennwand 21 geführt. Die längs ihres Umfangs mit dem Gehäuse 2 fest und gasdicht verbundene Trennwand 21 dient daher einerseits als Strömungsleitmittel für das Abgas bzw. das Abgas-Reduktionsmittelgemisch und andererseits als mechanische Halterung für die SCR-Katalysatoren 7, 8 und das Sammelrohr 6. An ihrem ausgangsseitigen Ende sind die SCR-Katalysatoren 7, 8 durch entsprechende Öffnungen der Trennwand 20 geführt, wobei hier die SCR-Katalysatoren 7, 8 nicht notwendigerweise gasdicht in die entsprechenden Öffnungen der Trennwand 20 eingepasst sein müssen.

Das längs seines Weges in den SCR-Katalysatoren 7, 8 von Stickoxiden gereinigte Abgas tritt in einer durch die Trennwände 19, 20 seitlich begrenzten zweiten Umlenkkammer 12 aus den SCR-Katalysatoren 7, 8 aus. Da die Trennwand 20 teilweise gelocht ausgeführt ist, während die Trennwand 19 einen gasdichten Abschluss zur Partikelfilterkammer 11 bildet, wird das gereinigte Abgas nach einer Änderung der Strömungsrichtung weiter durch die gelochte Trennwand 20 in eine Ausströmkammer 13 geleitet.

In der Ausströmkammer 13 wird das Abgas von einem von dort durch die Trennwand 21 und die Wand des Gehäuses 2 nach außen aus dem Gehäuse 2 geführten Ausströmrohr 9 aufgenommen und aus dem Gehäuse 2 geleitet. Das Ausströmrohr 9 ist vorzugsweise an seinem eingangsseitigen Endbereich gelocht ausgeführt und mit einer gelochten Endplatte versehen. Dies trägt, wie auch die Lochung der Trennwände 18 und 20, zur Schalldämpfung bei.

In der beschriebenen Ausführungsform ist damit ein baulich einfach und kompakt gestaltetes Abgasnachbehandlungssystem gebildet, mit welchem eine umfassende Abgasreinigung und zusätzlich eine besonders effektive Schalldämpfung erzielt werden kann.

Die Reinigungswirkung des erfindungsgemäßen Abgasnachbehandlungssystems kann durch eine Ergänzung um eine weitere katalytische Funktion nochmals verbessert werden. Diese kann beispielsweise in einer auf die Filterringe auf die einströmseitige oder ausströmseitige Fläche aufgebrachten katalytisch wirksamen Beschichtung bestehen. Die katalytische Funktion kann jedoch auch durch Sintermaterialfilterringe realisiert werden, bei welchen das Sintermaterial selbst eine katalytische Wirksamkeit besitzt. Es ist ferner möglich, die katalytische Funktion durch an dem Filterkörper befestigte, beispielsweise oxidationskatalytisch wirkende Plattenelemente zu realisieren. Stellvertretend für gegebenenfalls mehrere solcher katalytischen Plattenelemente ist in Fig. 1 ein einzelnes, ringförmig ausgebildetes katalytisches Plattenelement 5 dargestellt, welches sich in radialer Richtung in den Außenbereich des Filterkörpers ausdehnt. Vorzugsweise ist der Filterkörper gemäß der in der deutschen Offenlegungsschrift DE 100 35 544 A1 beschriebenen Weise ausgebildet und mit katalytisch wirkenden Plattenelementen versehen.

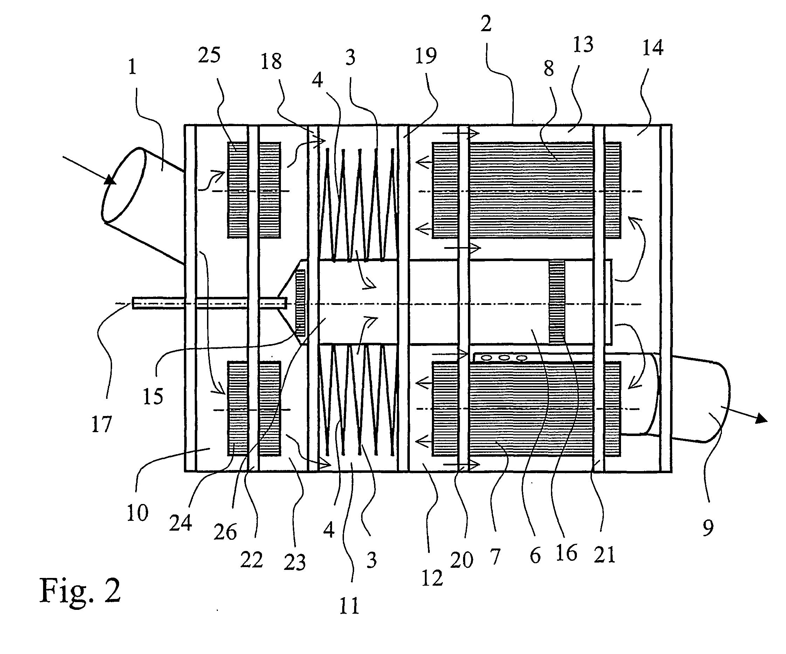

In Fig. 2 ist eine weitere vorteilhafte Ausführungsform des erfindungsgemäßen Abgasnachbehandlungssystems dargestellt. Dabei sind die Bauelemente der Anordnung nach Fig. 2, soweit sie mit den Teilen der Fig. 1 übereinstimmen, durch dieselben Bezugszeichen gekennzeichnet.

Das in Fig. 2 dargestellte Abgasnachbehandlungssystem unterscheidet sich von dem in Fig. 1 dargestellten System im wesentlichen durch einen hier aus zwei Wabenkörpermonolithen 24, 25 bestehenden Oxidationskatalysator, welcher in Abgasströmungsrichtung gesehen dem Partikelfilter 3 vorgeschaltet ist. Hierzu ist das Gehäuse 2 um eine Zwischenkammer 23 gegenüber der in Fig. 1 dargestellten Ausführungsform erweitert. Die Zwischenkammer 23 trennt mittels der Trennwand 22 die Einströmkammer 10 von der Partikelfilterkammer 11. Die Trennwand 22 verfügt über Öffnungen zur gasdichten Durchführung der Zufuhrleitung 17 und zur ringsum abgedichteten Aufnahme der Katalysatorkörper 24, 25 und trennt im Übrigen die Einströmkammer 10 gasdicht von der Zwischenkammer 23. Das über das Eingangsrohr 1 in die Einströmkammer 10 des Gehäuses 2 einströmende Abgas wird daher vor der Zuleitung in die Partikelfilterkammer 11 über die Katalysatorkörper 24, 25 in die Zwischenkammer 23 geleitet. Das Abgas erfährt dadurch vor seiner Filterung eine oxidationskatalytische Behandlung, wobei der Gehalt an oxidierbaren Bestandteilen wie Kohlenwasserstoffe oder Kohlenmonoxid, im Abgas vermindert wird. Ferner kann im Abgas enthaltenes Stickstoffmonoxid zu Stickstoffdioxid oxidiert werden, wodurch der Abbrand von auf dem Filterkörper abgelagerten Rußpartikeln erleichtert wird. Mit dieser Ausführungsform kann auf die an dem Filterkörper befestigten oxidationskatalytisch wirkenden Plattenelemente der in Fig. 1 dargestellten Ausführungsform verzichtet werden.

Eine weitere Verbesserung der Schadstoffemission kann mit einer Abgasrückführung erzielt werden. Zu diesem Zweck wird eine stromauf der Reduktionsmittelzugabe in den Filterinnenbereich 26 mündende Abgasrückführleitung (nicht dargestellt) aus dem Gehäuse 2 herausgeführt und an das Saugleitungssystem des Motors angeschlossen. Auf diese Weise kann zum Motor gefiltertes und reduktionsmittelfreies Abgas zurückgeführt werden. Die beschriebene Abgasrückführung lässt sich selbstverständlich sowohl bei der Ausführungsform nach Fig. 1 als auch bei der Ausführungsform nach Fig. 2 realisieren.

## Patentansprüche

1. Abgasnachbehandlungssystem, insbesondere für einen Dieselmotor, mit
- einem Abgaspartikelfilter (3)
- einem dem Abgaspartikelfilter (3) in Abgasströmungsrichtung nachgeschalteten Stickoxid-Reduktionskatalysator (7, 8) und
- einer Reduktionsmittelzugabevorrichtung (17),
**dadurch gekennzeichnet,**
**dass** das Abgaspartikelfilter (3) als ein poröser zylindrischer Filterkörper mit
- im wesentlichen radialer Abgaseinströmrichtung in den Filterkörper,
- einem Filterinnenbereich (26) für gefiltertes Abgas und
- axialer Abgasausströmrichtung aus dem Filterinnenbereich (26)
ausgebildet ist, und dass über die Reduktionsmittelzugabevorrichtung (17) eine Zugabe von Reduktionsmittel in den Filterinnenbereich (26) vorgesehen ist.

2. Abgasnachbehandlungssystem nach Anspruch 1,
**dadurch gekennzeichnet,**
**dass** der Filterkörper durch paarweise zusammengefasste poröse Filterplattenringe (4) gebildet ist.

3. Abgasnachbehandlungssystem nach Anspruch 1 oder 2,
**dadurch gekennzeichnet,**
**dass** das Abgaspartikelfilter (3) und der Stickoxid-Reduktionskatalysator (7, 8) in einem gemeinsamen Gehäuse (2) angeordnet sind.

4. Abgasnachbehandlungssystem nach einem der vorangehenden Ansprüche,
**dadurch gekennzeichnet,**
**dass** Strömungsleitmittel zur Weiterleitung gefilterten Abgases zum Stickoxid-Reduktionskatalysator (7, 8) vorgesehen sind, welche ein aus dem Filterinnenbereich (26) des Filterkörpers herausgeführtes Sammelrohr (6) umfassen.

5. Abgasnachbehandlungssystem nach Anspruch 4,
**dadurch gekennzeichnet,**
**dass** im Sammelrohr (6) ein Katalysatorelement (15, 16) angeordnet ist.

6. Abgasnachbehandlungssystem nach Anspruch 4 oder 5,
**dadurch gekennzeichnet,**
**dass** der Stickoxid-Reduktionskatalysator (7; 8) achsparallel und benachbart zum Sammelrohr angeordnet ist.

7. Abgasnachbehandlungssystem nach einem der vorangehenden Ansprüche,
**dadurch gekennzeichnet,**
**dass** dem Abgaspartikelfilter (3) in Abgasströmungsrichtung ein Oxidationskatalysator (5, 24, 25) vorgeschaltet ist.

8. Abgasnachbehandlungssystem nach Anspruch 7,
**dadurch gekennzeichnet,**
**dass** das Abgaspartikelfilter (3) und der Oxidationskatalysator (5, 24, 25) in einem gemeinsamen Gehäuse (2) angeordnet sind.

9. Abgasnachbehandlungssystem nach einem der vorangehenden Ansprüche,
**dadurch gekennzeichnet,**
**dass** eine aus dem Filterinnenbereich (26) herausgeführte Abgasrückführleitung zur Abzweigung eines Teilstroms gefilterten Abgases stromauf der Reduktionsmittelzugabe und zur Rückführung zum Dieselmotor vorgesehen ist.

## Claims

1. An exhaust treatment system, in particular for a diesel engine, having
- an exhaust gas particle filter (3),
- an NOx-reducing catalytic converter (7, 8) positioned downstream of the exhaust gas particle filter (3) in the direction of flow of the exhaust gas, and
- a reducing agent feed device (17),
**characterised in that**
the exhaust gas particle filter (3) is designed as a porous, cylindrical filter body with
- an essentially radial direction of flow of the exhaust gas into the filter body,
- an area (26) inside the filter body for filtered exhaust gas and
- an axial direction of flow of the exhaust gas out of the area (26) inside the filter body,
and the addition of reducing agent into the area (26) inside the filter body is provided via the reducing agent feed device (17).

2. An exhaust treatment system in accordance with claim 1,
**characterised in that**
the filter body takes the form of pairs of combined porous filter plate rings (4).

3. An exhaust treatment system in accordance with claim 1 or 2,
**characterised in that**
the exhaust gas particle filter (3) and the NOx-reducing catalytic converter (7, 8) are positioned in a common housing (2).

4. An exhaust treatment system in accordance with one of the preceding claims,
**characterised in that**
flow guidance means comprising a collecting pipe (6) leading out of the area (26) inside the filter body are provided to convey filtered exhaust gas to the NOx-reducing catalytic converter (7, 8).

5. An exhaust treatment system in accordance with claim 4,
**characterised in that**
a catalytic converter element (15, 16) is positioned in the collecting pipe (6).

6. An exhaust treatment system in accordance with claim 4 or 5,
**characterised in that**
the NOx-reducing catalytic converter (7; 8) is positioned axis-parallel and adjacent to the collecting pipe (6).

7. An exhaust treatment system in accordance with one of the preceding claims,
**characterised in that**
an oxidising catalytic converter (5, 24, 25) is positioned upstream of the exhaust gas particle filter (3) in the direction of flow of the exhaust gas.

8. An exhaust treatment system in accordance with claim 7,
**characterised in that**
the exhaust gas particle filter (3) and the oxidising catalytic converter (5, 24, 25) are positioned in a common housing (2).

9. An exhaust treatment system in accordance with one of the preceding claims,
**characterised in that**
an exhaust gas recirculation line leading out of the area (26) inside the filter body is provided to divert a part flow of filtered exhaust gas upstream of the reducing agent feed point and to recirculate it to the diesel engine.

## Revendications

1. Système de post-traitement des gaz d'échappement pour un moteur diesel, avec
- un filtre à particules des gaz d'échappement (3)
- un catalyseur de réduction des oxydes d'azote (7, 8) monté en aval du filtre à particules des gaz d'échappement (3) et
- un dispositif d'addition d'agent réducteur (17),
**caractérisé en ce que**
le filtre à particules des gaz d'échappement (3) est configuré comme un corps filtrant cylindrique poreux avec
- un sens d'admission des gaz d'échappement sensiblement radial dans le corps filtrant,
- une zone intérieure filtrante (26) pour les gaz d'échappement filtrés et
- un sens axial d'évacuation des gaz d'échappement hors de la zone intérieure filtrante (26),
et **en ce qu'**une addition d'agent réducteur est prévue dans la zone intérieure filtrante (26) par l'intermédiaire du dispositif d'addition d'agent réducteur (17).

2. Système de post-traitement des gaz d'échappement selon la revendication 1, **caractérisé en ce que** le corps filtrant est formé par des anneaux de plaque filtrante (4) poreux réunis ensemble.

3. Système de post-traitement des gaz d'échappement selon la revendication 1 ou 2, **caractérisé en ce que** le filtre à particules des gaz d'échappement (3) et le catalyseur de réduction des oxydes d'azote (7, 8) sont disposés dans un boîtier commun (2).

4. Système de post-traitement des gaz d'échappement selon l'une quelconque des revendications précédentes, **caractérisé en ce qu'**il est prévu des moyens de guidage de l'écoulement pour acheminer les gaz d'échappement filtrés vers le catalyseur de réduction des oxydes d'azote (7, 8), lesquels moyens comprennent un tube collecteur (6) sortant de la zone intérieure filtrante (26) du corps filtrant.

5. Système de post-traitement des gaz d'échappement selon la revendication 4, **caractérisé en ce qu'**un élément de catalyseur (15, 16) est disposé dans le tube collecteur (6).

6. Système de post-traitement des gaz d'échappement selon la revendication 4 ou 5, **caractérisé en ce que** le catalyseur de réduction des oxydes d'azote (7, 8) est disposé parallèlement à l'axe et est adjacent au tube collecteur.

7. Système de post-traitement des gaz d'échappement selon l'une quelconque des revendications précédentes, **caractérisé en ce qu'**un catalyseur d'oxydation (5, 24, 25) est monté en amont du filtre à particules des gaz d'échappement (3) dans le sens d'écoulement des gaz d'échappement.

8. Système de post-traitement des gaz d'échappement selon la revendication 7, **caractérisé en ce que** le filtre à particules des gaz d'échappement (3) et le catalyseur d'oxydation (5, 24, 25) sont disposés dans un boîtier commun (2).

9. Système de post-traitement des gaz d'échappement selon l'une quelconque des revendications précédentes, **caractérisé en ce qu'**une conduite de recyclage des gaz d'échappement sortant de la zone intérieure filtrante (26) est prévue pour la dérivation d'un flux partiel des gaz d'échappement filtrés en amont de l'addition d'agent réducteur et pour le recyclage vers le moteur diesel.
